Europäisches Patentamt

European Patent Office

Office européen des brevets

(19)

(11)  **EP 0 449 845 B2**

(12)  **NEUE EUROPÄISCHE PATENTSCHRIFT**

(45) Veröffentlichungstag und Bekanntmachung des
Hinweises auf die Entscheidung über den
Einspruch:
**25.11.1998 Patentblatt 1998/48**

(45) Hinweis auf die Patenterteilung:
**01.09.1993 Patentblatt 1993/35**

(21) Anmeldenummer: **89912831.8**

(22) Anmeldetag: **11.11.1989**

(51) Int. Cl.⁶: **B60T 8/32**

(86) Internationale Anmeldenummer:
**PCT/EP89/01351**

(87) Internationale Veröffentlichungsnummer:
**WO 90/06872 (28.06.1990 Gazette 1990/15)**

(54) **ANTIBLOCKIERREGELSYSTEM**

ANTILOCK BRAKING SYSTEM

SYSTEME DE REGLAGE ANTIBLOCAGE

(84) Benannte Vertragsstaaten:
**AT DE FR GB SE**

(30) Priorität: **14.12.1988 DE 3841958**

(43) Veröffentlichungstag der Anmeldung:
**09.10.1991 Patentblatt 1991/41**

(73) Patentinhaber: **ROBERT BOSCH GMBH**
**70442 Stuttgart (DE)**

(72) Erfinder:
• **BEYER, Claus**
**D-7141 Schwieberdingen (DE)**
• **DOMINKE, Peter**
**D-7120 Bietigheim-Bissingen (DE)**

(56) Entgegenhaltungen:
DE-A- 3 614 770        DE-C- 2 702 800
DE-C- 3 345 729        GB-A- 2 176 557
US-A- 3 609 313        US-A- 3 740 103

EP 0 449 845 B2

## Beschreibung

### Problemstellung

Wird eine Fahrzeug mit einem Notrad gefahren oder mit sehr unterschiedlichem Reifendruck, so kann dem Antiblockierregelsystem ein nicht oder nicht in dieser Höhe vorhandenen Bremsschlupf vorgetäuscht werden, der zu einem unnötigen Druckabbau führen kann, also zu unterbremsten Rädern führen kann.

### Vorteile der Erfindung

Die Erfindung gemäß Anspruch 1 verhindert solche unterbremsten Räder durch Abschalten des Reglers. Besonders vorteilhaft ist die Verbindung des Abschaltens des Reglers mit einem der Abschaltung vorhergehenden Verkleinerung des Bremsschlupes um einen vorgegebenen Wert oder Vergrößerung des Schwellwerts, mit dem der Bremsschlupf verglichen wird, um einen vorgegebenen Wert.

Die Erfindung kann bei Antiblockierregelsystemen verwendet werden, bei denen die Regelgröße Bremsschlupf mit einer Schwelle verglichen wird und nach Überschreiten der Schwelle ein Signal zur Druckbeeinflussung erzeugt wird. In diesem Fall kann entweder diese Schwelle vergrößert oder der ermittelte Schlupfwert vor dem Vergleich verkleinert oder die zur Schlupfbildung benutzte Radgeschwindigkeit vergrößert oder die Referenzgeschwindigkeit verkleinert werden. Die Verwendung des Bremsschlupfs, ohne ihn direkt mit einem Schwellwert zu vergleichen (z.B. gemäß DE-OS 36 14 770 oder ähnlich), läßt nur die drei letztgenannten Einflußmöglichkeiten zu.

### Figurenbeschreibung

Anhand der Zeichnung wird ein Ausführungsbeispiel der Erfindung erläutert.

Es zeigen:

Fig. 1    ein Blockschaltbild eines Ausführungsbeispiels

Fig. 2    ein Diagramm zur Erläuterung

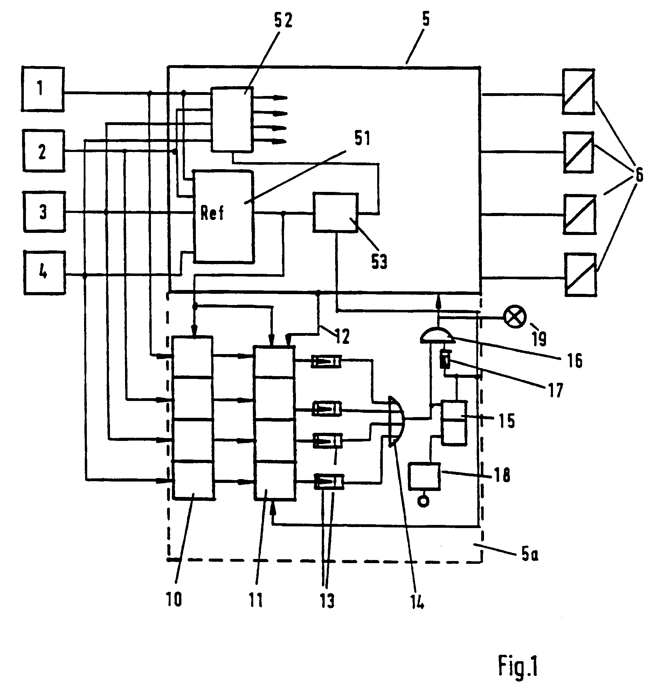

In Fig. 1 sind den Rädern des Fahrzeugs zugeordnete Geschwindigkeitssensoren mit 1 - 4 bezeichne. Sie liefern ihre Signale an eine Auswerteschaltung 5, die daraus Steuersignale für 3/3-Magnetventile 6 erzeugt. Es kann offen bleiben, wie diese Steuersignale erzeugt werden. Wesentlich für die Erfindung ist, daß Schlupfsignale gebildet und in die Regelung einbezogen werden. Zur Schlupfbildung enthält die Auswerteschaltung 5 einen Block 51 zur an sich bekannten Bildung einer der Fahrzeuggeschwindigkeit angenäherten Referenzgeschwindigkeit aus den Radgeschwindigkeitssignalen und einen Block 52 zur Schlupfbildung aus der Referenzgeschwindigkeit und den einzelnen Radgeschwindigkeiten.

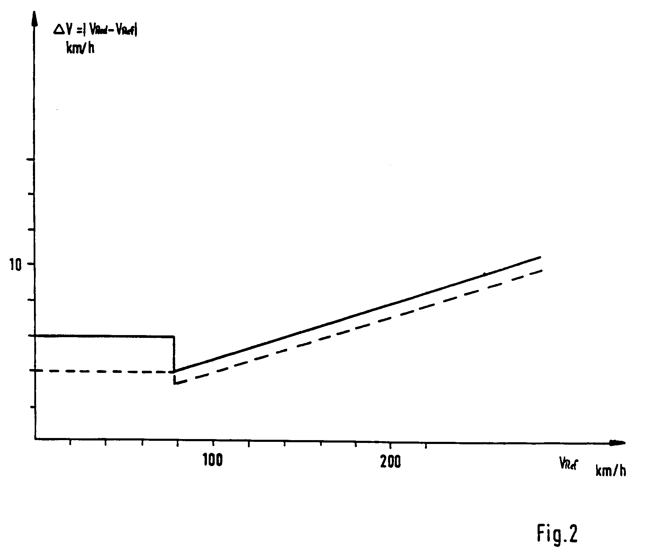

In einem Teil 5a der Auswerteschaltung 5 wird in einem Block 10 ebenfalls der Schlupf an den einzelnen Rädern gebildet. Die Beträge dieser Schlupfwerte werden in Vergleichern mit vorgegebenen Werten, die geschwindigkeitsabhängig sind, verglichen. Hierzu wird den Vergleichern die Referenzgeschwindigkeit zugeführt. In ihrer ersten Stellung geben die Vergleicher 11 ein Signal ab, wenn eine erste in Fig. 2 gestrichelt eingezeichnete Schwelle durch das Schlupfsignal $\Delta V = |V_{Rad} - V_{Ref}|$ überschritten ist. Diese Schwelle ist bis z.B. 80 km/h gleichbleibend (z.B. 4 km/h) und danach ein vorgegebener Prozentsatz (z.B. 3%) der Referenzgeschwindigkeit. Der Vergleich wird in den Vergleichern 11 nur durchgeführt, wenn das Fahrzeug nicht gebremst wird (Ltg. 12). Wird die vorgegebene Schwelle überschritten, und zwar für eine durch die Verzögerungszeitglieder 13 vorgegebene Zeitspanne (z.B. 20 sec.), so entsteht am Ausgang eines Oder-Gatters 14 ein Signal, das ein bistabiles Glied 15 setzt. Dieses gibt nun ein Ausgangssignal ab, das einmal in den Vergleichsgliedern 11 eine in Fig. 2 durchgezogen gezeichnete höhere Schwelle wirksam macht (z.B. zuerst 6 km/h und ab 80 km/h 6 % der Referenz), und außerdem einen Block 53 in der Auswertschaltung 5 aktiviert, der die Referenzgeschwindigkeit zur Bremsschlupfbildung des Blocks 52 um einen vorgegebenen Wert (in km/h) erniedrigt. Der Regler wird damit unempfindlicher gegenüber Bremsschlupf gemacht.

Werden auch die neuen Schwellen für eine Zeit (Zeitglieder 13) überschritten, so wird, da das bistabile Glied 15 bei Auftreten des neuen Ausgangssignals des Oder-Gatters 14 gesetzt ist, am Ausgang eines Und-Gatters 16 ein Abschaltsignal für den Regler abgegeben. Ein Verzögerungsglied 17 mit geringer Verzögerungszeit verhindert, daß das Und-Gatter 16 schon beim Überschreiten der kleinen Schwelle im Vergleicher 11 durchlässig wird und abschaltet. Die Rücksetzung des bistabilen Glieds 15 wird durch einen Block 18 bewirkt, dem die Referenzgeschwindigkeit zugeführt wird und der bei Erreichen der Geschwindigkeit 0 die Rücksetzung bewirkt.

Das erfindungsgemäße Antiblockierregelsystem erkennt außerhalb einer Bremsung z.B. das Vorhandensein eines Notrads und schaltet, solange sich der dadurch zustande kommende Schlupf in einem zwischen der ersten und zweiten Schwelle liegende Bereich befindet, auf einen schlupfunempfindlichen ABS-Betrieb um, um dann, wenn auch die zweite Schwelle überschritten wird, den Regler gänzlich abzuschalten. Dies wird dem Fahrer durch eine Lampe 19 angezeigt.

### Patentansprüche

1.  Verfahren zum Betrieb eines Antiblockierregelsystems, enthaltend Sensoren zur Bestimmung der Geschwindigkeit von Fahrzeugrädern, eine Auswerteschaltung, der die Geschwindigkeitssignale zugeführt werden und die daraus Bremsdrucksteuersignale erzeugt und Bremsdrucksteuereinrichtungen, die mit den Bremsdrucksteuersignalen angesteuert werden und die den Bremsdruck im Sinne des Verhindern des Radblockierens variieren, wobei der Bremsschlupf der Räder als Regelgröße zumindest mit ausgewertet wird und wobei zur Gewinnung des Bremsschlupfes eine aus den Radgeschwindigkeiten abgeleitete, dem Fahrzeuggeschwindigkeitsverlauf angenäherten Referenzgeschwindigkeit gewonnen wird, und bei nicht gebremstem Fahrzeug oder bei nicht laufender Antiblockierregelung die Schlupfwerte der Räder ermittelt werden, dadurch gekennzeichnet, daß nur bei nicht gebremstem Fahrzeug und bei Ansteigen des Betrags des Schlupfes über einen vorgegebenen Wert hinaus und für wenigstens eine vorgegebene Zeit der Regler abgeschaltet wird, wobei der Wert zumindest bereichsweise proportional zur Referenzgeschwindigkeit ist.

2. Verfahren nach Anspruch 1, dadurch gekennzeichnet, daß die Abhängigkeit von der Referenzgeschwindigkeit ab einer vorgegebenen Referenzgeschwindigkeit gültig ist und daß darunter ein fester vorgegebener Geschwindigkeitswert gültig ist.

3. Verfahren nach einem der Ansprüche 1 oder 2, dadurch gekennzeichnet daß zusätzlich ein zweiter kleinerer vorgegebener Wert und gegebenenfalls eine zweite vorgegebene Zeit verwendet werden und daß bei Überschreiten dieses Werts für die vorgegebene Zeit die Regelgröße Bremsschlupf bis zum nächsten Fahrzeugstillstand um einen vorgegebenen Wert vermindert oder ein Vergleichsschwellwert für den Schlupf um einen vorgegebenen Wert vergrößert wird.

4. Verfahren nach Anspruch 3, dadurch gekennzeichnet, daß die zur Bremsschlupfbildung verwendete Referenzgeschwindigkeit um einen vorgegebenen Wert reduziert wird.

5. Verfahren nach Anspruch 3, dadurch gekennzeichnet, daß die zur Bremsschlupfbildung benutzte Radgeschwindigkeit um einen vorgegebenen Wert erhöht wird.

## Claims

1. Method of operating an antilock control system, comprising sensors for determining the speed of vehicle wheels, an evaluation circuit, to which the speed signals are fed and which generates from them brake pressure control signals, and brake pressure control devices, which are activated by the brake pressure control signals and vary the brake pressure for the purpose of preventing wheel locking, in which method the brake slip of the wheels is at least included in the evaluation as a controlled variable and, for obtaining the brake slip, a reference speed derived from the wheel speeds and approximated to the vehicle speed profile is obtained and, when the vehicle is not being braked or the antilock control is not operating, the slip values of the wheels are determined, characterised in that, only when the vehicle is not being braked and if the amount of slip rises above a predetermined value and for at least a predetermined time, the controller is switched off, the value being proportional to the reference speed, at least in certain ranges.

2. Method according to Claim 1, characterised in that the dependence on the reference speed is valid from a predetermined reference speed and in that below this a fixed predetermined speed value is valid.

3. Method according to either of Claims 1 and 2, characterised in that in addition a second, smaller predetermined value and, if appropriate, a second predetermined time are used and in that, if this value is exceeded for the predetermined time, the controlled variable of brake slip is decreased by a predetermined value until the next time the vehicle is at a standstill, or a comparison threshold value for the slip is increased by a predetermined value.

4. Method according to Claim 3, characterised in that the reference speed used for brake slip forming is reduced by a predetermined value.

5. Method according to Claim 3, characterised in that the wheel speed used for brake slip forming is raised by a predetermined value.

## Revendications

1. Procédé de fonctionnement d'un système de régulation antiblocage, comprenant des capteurs pour mesurer la vitesse des roues du véhicule, un circuit d'exploitation auquel sont injectés les signaux de vitesse et les signaux de commande de pression de freinage et des dispositifs de régulation de pression de freinage qui sont commandés par les signaux de commande de pression de freinage et qui font varier la pression de freinage au sens d'empêcher le blocage de roue, procédé dans lequel on exploite le patinage de freinage des roues comme paramètre de régulation, et pour obtenir le patinage de freinage on obtient une vitesse de référence approchée de l'évolution de la vitesse du véhicule, dérivée des vitesse de roue et on détermine les valeurs de patinage des roues quand le véhicule n'est pas freiné ou quand la régulation antiblocage ne fonctionne pas,
caractérisé en ce que
seulement lorsque le véhicule n'est pas freiné et lors de l'augmentation du montant du patinage au-delà d'une valeur fixée et pour au moins un temps prédéterminé le régulateur est déconnecté, la valeur étant proportionnelle au moins par zone à la vitesse de référence.

2. Procédé selon la revendication 1,
caractérisé en ce que
la dépendance de la vitesse de référence est valable à partir d'une vitesse de référence prédéterminée et qu'en dessous, c'est une valeur prédéterminée de la vitesse qui est valable.

3. Procédé selon l'une des revendications 1 ou 2,
caractérisé en ce qu'
en plus on utilise une deuxième valeur prédéterminée plus petite et le cas échéant un deuxième temps prédéterminé et que lors du dépassement de cette valeur pour ce temps prédéterminé le paramètre de régulation patinage de freinage est diminué d'une valeur prédéterminée jusqu'au prochain arrêt du véhicule autour d'une valeur prédéterminée ou une valeur de seuil de comparaison du patinage est augmentée autour d'une valeur prédéterminée.

4. Procédé selon la revendication 3,
caractérisé en ce que
la vitesse de référence utilisée pour former le patinage de freinage est réduite d'une valeur prédéterminée.

5. Procédé selon la revendication 3
caractérisé en ce que
la vitesse de roue utilisée pour former le patinage de freinage est augmentée d'une valeur prédéterminée.

Fig.1

Fig.2